# EUROPEAN PATENT APPLICATION

(11) **EP 4 528 853 A1**
(43) Date of publication of application: **26.03.2025**
(21) Application number: 23873261.4
(22) Date of filing: 27.09.2023
(51) Int. Cl.: H01M 4/525, G01N 21/65, H01M 4/36, H01M 4/1391, H01M 4/02, G01N 21/88

(54) **METHOD FOR EVALUATING QUALITY OF POSITIVE ELECTRODE ACTIVE MATERIAL, POSITIVE ELECTRODE ACTIVE MATERIAL, AND METHOD FOR MANUFACTURING POSITIVE ELECTRODE**

(30) Priority: 27.09.2022 KR 20220122638
(71) Applicant: LG Chem, Ltd., Yeongdeungpo-gu Seoul 07336 (KR)
(72) Inventor: KIM, Sang Jun, Daejeon 34122 (KR); JUNG, Won Sig, Daejeon 34122 (KR); BAEK, Hyeon Hui, Daejeon 34122 (KR); LEE, Eung Ju, Daejeon 34122 (KR); LEE, Jeong Kyu, Daejeon 34122 (KR); OH, Sung Joon, Daejeon 34122 (KR)
(74) Representative: Hoffmann Eitle
(86) International application number: PCT/KR2023/015122
(87) International publication number: WO 2024/072154

(57) **Abstract**

The present invention relates to a method of evaluating quality of a positive electrode active material, which includes a step of (A) determining the positive electrode active material as a working product when a Raman shift value of a peak corresponding to an A1g vibration mode of LiNiO₂ in a Raman spectrum of a surface of the positive electrode active material satisfies pre-established positive electrode active material quality evaluation criteria, a positive electrode active material which is determined as a working product by the method and may further improve performance of a battery, and a method of preparing a positive electrode which includes a step of evaluating quality of the positive electrode active material by the method of evaluating quality of a positive electrode active material.

## Description

### TECHNICAL FIELD

### Cross-reference to Related Applications

This application claims priority from Korean Patent Application No. 10-2022-0122638, filed on September 27, 2022, the disclosure of which is incorporated by reference herein.

### Technical Field

The present invention relates to a method of evaluating quality of a positive electrode active material, a positive electrode active material, and a method of preparing a positive electrode which includes a step of evaluating quality of a positive electrode active material by the method of evaluating quality of a positive electrode active material.

### BACKGROUND ART

Demand for secondary batteries as an energy source has been significantly increased as technology development and demand with respect to mobile devices and electric vehicles have recently increased.

A positive electrode active material used in a lithium secondary battery generally has a form of a spherical secondary particle which is formed by aggregation of hundreds of submicron-sized fine primary particles. However, the positive electrode active material in the form of a secondary particle has a problem in that battery characteristics are degraded as the secondary particle is broken as the aggregated primary particles are separated during repeated charge and discharge.

In order to solve this problem, development of a positive electrode active material in a form of a single particle is being actively conducted, but, when preparing the positive electrode active material in the form of a single particle, since sintering at a higher temperature than that when preparing the positive electrode active material in the form of a secondary particle is required, there is a problem in that a ratio of a NiO reduction layer on a particle surface is increased. In a case in which the ratio of the NiO reduction layer on the surface of the positive electrode active material is increased, problems, such as an increase in battery resistance, a decrease in capacity, and a decrease in output occur, and, accordingly, there is a need to control the NiO reduction layer.

In order to control the NiO reduction layer, in a case in which the surface of the positive electrode active material is surface-treated using a material containing cobalt, the NiO reduction layer is decreased as the material containing cobalt diffuses, and a coating layer containing cobalt is formed.

Since performance of the positive electrode active material varies depending on a degree of cobalt diffusion, an evaluation method to more accurately identify an extent to which the cobalt has diffused is not only needed, but development of a positive electrode active material capable of further improving performance of the battery is also needed.

### DISCLOSURE OF THE INVENTION

### TECHNICAL PROBLEM

An aspect of the present invention provides a method of evaluating quality of a positive electrode active material, which may easily filter out a poor-quality positive electrode active material through a Raman spectrum of a surface of the positive electrode active material, and a positive electrode active material which is determined as a working product by the method and may further improve performance of a battery.

Another aspect of the present invention provides a method of preparing a positive electrode which includes a step of evaluating quality of a positive electrode active material by the method of evaluating quality of a positive electrode active material.

### TECHNICAL SOLUTION

The present invention provides a method of evaluating quality of a positive electrode active material, a positive electrode active material, and a method of preparing a positive electrode.
(1) The present invention provides a method of evaluating quality of a positive electrode active material which includes: (A) a first determination step of determining the positive electrode active material as a working product when a Raman shift value of a peak corresponding to an A1g vibration mode of LiNiO₂ in a Raman spectrum of a surface of the positive electrode active material satisfies pre-established positive electrode active material quality evaluation criteria, and determining the positive electrode active material as a defective product when the Raman shift value does not satisfy the pre-established positive electrode active material quality evaluation criteria.
(2) The present invention provides the method of evaluating quality of a positive electrode active material of (1) above, wherein the method further includes: a step of (A') preparing a positive electrode active material in a form of a single particle which includes a lithium transition metal oxide in a form of a single particle; and a coating portion containing cobalt which is formed on the lithium transition metal oxide in the form of a single particle, before the step (A).
(3) The present invention provides the method of evaluating quality of a positive electrode active material of (2) above, wherein the positive electrode active material in the form of a single particle is prepared by heat-treating a mixture in which the lithium transition metal oxide in the form of a single particle and a cobalt raw material are mixed.
(4) The present invention provides the method of evaluating quality of a positive electrode active material of any one of (1) to (3) above, wherein the pre-established positive electrode active material quality evaluation criteria in the step (A) is that the Raman shift value of the peak corresponding to the A1g vibration mode of LiNiO₂ is 560 cm⁻¹ or more.
(5) The present invention provides the method of evaluating quality of a positive electrode active material of any one of (1) to (4) above, wherein the method further includes: (B) a second determination step of determining the positive electrode active material as a working product when a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in the Raman spectrum of the surface of the positive electrode active material determined as the working product in the step (A) is 0.3 or less, and determining the positive electrode active material as a defective product when the ratio is greater than 0.3.
(6) The present invention provides a method of preparing a positive electrode which includes steps of: (S1) preparing a positive electrode active material in a form of a single particle which includes a lithium transition metal oxide in a form of a single particle; and a coating portion containing cobalt which is formed on the lithium transition metal oxide in the form of a single particle; (S2) evaluating quality of the positive electrode active material by the method of any one of claims 1 to 5; and (S3) preparing a positive electrode by using the positive electrode active material determined as a working product.
(7) The present invention provides the method of preparing a positive electrode of (6) above, wherein the positive electrode active material in the form of a single particle is prepared by heat-treating a mixture in which the lithium transition metal oxide in the form of a single particle and a cobalt raw material are mixed.
(8) The present invention provides the method of preparing a positive electrode of (6) above, wherein the positive electrode active material in the form of a single particle is prepared by heat-treating a mixture, in which the lithium transition metal oxide in the form of a single particle and a cobalt raw material are mixed, at a temperature of greater than 720°C to less than 780°C.
(9) The present invention provides a positive electrode active material in a form of a single particle which includes a lithium transition metal oxide in a form of a single particle; and a coating portion containing cobalt which is formed on the lithium transition metal oxide in the form of a single particle, wherein a Raman shift value of a peak corresponding to an A1g vibration mode of LiNiO₂ in a Raman spectrum of a surface of the positive electrode active material is 560 cm⁻¹ or more.
(10) The present invention provides the positive electrode active material in the form of a single particle of (9) above, wherein the positive electrode active material in the form of a single particle further includes LiCoO₂ in a form of an island which is discontinuously formed on the surface.
(11) The present invention provides the positive electrode active material in the form of a single particle of (9) or (10) above, wherein a ratio of an intensity of a peak (550 cm⁻¹ to 620 cm⁻¹) corresponding to an A1g vibration mode of LiCoO₂ to an intensity of the peak (500 cm⁻¹ to 600 cm⁻¹) corresponding to the A1g vibration mode of LiNiO₂ in the Raman spectrum of the surface of the positive electrode active material is 0.3 or less.
(12) The present invention provides the positive electrode active material in the form of a single particle of any one of (9) to (11) above, wherein the positive electrode active material in the form of a single particle has an average particle diameter (D₅₀) of 0.1 µm to 10 µm.
(13) The present invention provides the positive electrode active material in the form of a single particle of any one of (9) to (12) above, wherein the positive electrode active material in the form of a single particle has a form in which 50 or less primary particles each composed of 10 or less single crystal grains are aggregated.
(14) The present invention provides the positive electrode active material in the form of a single particle of any one of (9) to (13) above, wherein the lithium transition metal oxide in the form of a single particle is a lithium composite transition metal oxide containing nickel (Ni), cobalt (Co), and manganese (Mn).
(15) The present invention provides the positive electrode active material in the form of a single particle of any one of (9) to (14) above, wherein the lithium transition metal oxide in the form of a single particle has a composition represented by Formula 1.

[Formula 1] LiₐNiₑCo_{c}Mn_{d}M¹ₑO₂

wherein, in Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.9≤a≤1.1, 0.8≤b<1.0, 0<c<0.2, 0<d<0.2, 0≤e≤0.1, and b+c+d+e=1.

(16) The present invention provides the positive electrode active material in the form of a single particle of any one of (9) to (15) above, wherein the coating portion is a region ranging from 5 nm to 100 nm from the surface of the positive electrode active material in a central direction.

### ADVANTAGEOUS EFFECTS

A method of evaluating quality of a positive electrode active material according to the present invention may easily determine a high quality positive electrode active material by measuring only a Raman spectrum of a surface of the positive electrode active material.

A positive electrode active material according to the present invention may improve resistance performance of a lithium secondary battery.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

In the present specification, the expression "positive electrode active material in a form of a single particle" is a concept in contrast to a positive electrode active material in a form of a spherical secondary particle formed by aggregation of hundreds of primary particles which is prepared by a conventional method, wherein it means a positive electrode active material composed of 50 or less primary particles. Specifically, in the present invention, the positive electrode active material in the form of a single particle may be a single particle composed of one primary particle, or may be in the form of a secondary particle in which 2 to 50, 2 to 40, 2 to 30, 2 to 20, 2 to 15, 2 to 10, or 2 to 5 primary particles are aggregated. In this case, the expression "primary particle" denotes the smallest unit of particles recognized when the positive electrode active material is observed through a scanning electron microscope.

The primary particle may be composed of 10 or less single crystal grains, and the grain may be analyzed using an electron backscatter diffraction (EBSD) analyzer. The single crystal grain is a unit indicated by the same color in electron backscatter diffraction (EBSD) Euler map data of one positive electrode active material particle, wherein it is a grain in which a grain boundary does not exist.

An average particle diameter (D₅₀) in the present specification means a particle size on the basis of 50% in a volume cumulative particle size distribution of positive electrode active material precursor, positive electrode active material, or lithium transition metal oxide powder. The average particle diameter (D₅₀) may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

An average particle diameter (D_{EBSD}) of the single crystal grains in the present specification means a particle size on the basis of 50% in a volume cumulative particle size distribution of the single crystal grains which is obtained through EBSD analysis using a scanning electron microscope (SEM). The EBSD analysis may obtain an image with SEM-EBSD equipment (e.g., FEI Quanta 200-EDAX Velocity super OIM 8) and may analyze the image with an image analysis software (EDAX OIM Analysis).

After a sample is placed on a general-purpose X-ray diffraction (XRD) holder, a pretreatment is performed such that a surface height of the sample is uniform by compressing the sample with a slide glass, and a Raman spectrum in this specification is obtained by measuring a portion corresponding to an area of 410 µm × 100 µm of the sample located on the XRD holder with a Raman spectrometer (using a 532 nm laser).

Hereinafter, the present invention will be described in more detail.

### Method of Evaluating Quality of Positive Electrode Active Material

A method of evaluating quality of a positive electrode active material according to the present invention is characterized in that it includes (A) a first determination step of determining the positive electrode active material as a working product when a Raman shift value of a peak corresponding to an A1g vibration mode of LiNiO₂ in a Raman spectrum of a surface of the positive electrode active material satisfies pre-established positive electrode active material quality evaluation criteria, and determining the positive electrode active material as a defective product when the Raman shift value does not satisfy the pre-established positive electrode active material quality evaluation criteria.

Before step (A), the method of evaluating quality of a positive electrode active material may include a step of (A') preparing a positive electrode active material in a form of a single particle which includes a lithium transition metal oxide in a form of a single particle; and a coating portion containing cobalt which is formed on the lithium transition metal oxide in the form of a single particle. Also, after step (A), the method of evaluating quality of a positive electrode active material may further include (B) a second step of determining the positive electrode active material as a working product when a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in the Raman spectrum of the surface of the positive electrode active material determined as the working product in step (A) is 0.3 or less, and determining the positive electrode active material as a defective product when the ratio is greater than 0.3.

The method of evaluating quality of a positive electrode active material according to the present invention may easily determine a high quality positive electrode active material by measuring only the Raman spectrum of the surface of the positive electrode active material. Specifically, the method of evaluating quality of a positive electrode active material according to the present invention may easily identify a positive electrode active material which may improve resistance characteristics of a battery when the positive electrode active material is used in the lithium secondary battery.

Hereinafter, each step of the method of evaluating quality of a positive electrode active material according to the present invention will be described in more detail.

### Step (A')

Step (A') is a step of preparing a positive electrode active material in a form of a single particle which includes a lithium transition metal oxide in a form of a single particle; and a coating portion containing cobalt which is formed on the lithium transition metal oxide in the form of a single particle, before step (A).

According to the present invention, the positive electrode active material in the form of a single particle may be prepared by heat-treating a mixture in which the lithium transition metal oxide in the form of a single particle and a cobalt raw material are mixed. In a case in which the mixture is heat-treated, a Raman shift of the peak corresponding to the A1g vibration mode of LiNiO₂ in the Raman spectrum of the surface of the positive electrode active material is identified while cobalt ions present in the cobalt raw material diffuse from a surface of the lithium transition metal oxide in the form of a single particle to a center portion.

The heat treatment temperature may be in a range of greater than 720°C to less than 780°C, and may specifically be greater than 720°C, 730°C or higher, 740°C or higher, 760°C or less, 770°C or less, and less than 780°C. In a case in which the mixture is heat-treated within the above temperature range, since the coating portion containing cobalt is optimally formed on the surface of the positive electrode active material in the form of a single particle, resistance performance of a lithium secondary battery, which includes a positive electrode including the positive electrode active material, may be excellent. Specifically, in the case that the mixture is heat-treated within the above temperature range, a positive electrode active material in the form of a single particle, which includes a lithium transition metal oxide in a form of a single particle; and a coating portion containing cobalt which is formed on the lithium transition metal oxide in the form of a single particle, wherein a Raman shift value of a peak corresponding to an A1g vibration mode of LiNiO₂ in a Raman spectrum of a surface of the positive electrode active material is 560 cm⁻¹ or more, may be prepared. LiNiO₂, as a main component of the lithium transition metal oxide in the form of a single particle, and LiCoO₂ identified in the coating portion have the same crystal structure (R3m), and the R3m crystal structure has two types of vibration modes, A1g and Eg, in a Raman spectrum, wherein, in the case that the mixture is heat-treated within the above temperature range, an appropriate amount of cobalt (Co) penetrates into a LiNiO₂ lattice while the cobalt penetrates into the positive electrode active material, and, as a result, a frequency of LiNiO₂ vibration mode is increased. Also, the positive electrode active material, which is prepared by heat-treating the mixture within the above temperature range, may have a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface of 0.3 or less. The reason for this is that, in the case that the mixture is heat-treated within the above temperature range, LiCoO₂ of the surface is decreased while the cobalt penetrates into the positive electrode active material. In addition, in a case in which the cobalt penetrates into the positive electrode active material, since NiO present on the surface is decreased and the surface is stabilized, resistance of the battery may be reduced.

In the present invention, the coating portion is a layer which is formed by diffusion of cobalt from the surface of the lithium transition metal oxide in the form of a single particle in a central direction when the lithium transition metal oxide in the form of a single particle and the cobalt raw material are mixed and then heat-treated. Thus, a composition of the coating portion is similar to a composition of the lithium transition metal oxide in the form of a single particle which is included in the positive electrode active material of the present invention, but a ratio of the cobalt among total metals other than lithium is greater than that of the lithium transition metal oxide in the form of a single particle. Nickel (Ni) present in the lithium transition metal oxide in the form of a single particle may be substituted with Co while the cobalt diffuses from the surface of the lithium transition metal oxide in the form of a single particle in the central direction, and the coating portion may have a structure identical to that of the lithium transition metal oxide in the form of a single particle, that is, a layered structure.

In the present invention, the coating portion may be a region ranging from 5 nm to 100 nm from the surface of the positive electrode active material in the central direction. The coating portion may specifically be a region up to 5 nm, 10 nm, 20 nm, 30 nm, 40 nm, 50 nm, 60 nm, 70 nm, 80 nm, 90 nm, or 100 nm from the surface of the positive electrode active material in the central direction.

### Step (A)

Step (A) is a first determination step of determining the positive electrode active material as a working product when a Raman shift value of a peak corresponding to an A1g vibration mode of LiNiO₂ in a Raman spectrum of a surface of the positive electrode active material satisfies pre-established positive electrode active material quality evaluation criteria, and determining the positive electrode active material as a defective product when the Raman shift value does not satisfy the pre-established positive electrode active material quality evaluation criteria.

In a case in which the Raman shift value of the peak corresponding to the A1g vibration mode of LiNiO₂ in the Raman spectrum of the surface of the positive electrode active material satisfies the pre-established positive electrode active material quality evaluation criteria, resistance performance of a lithium secondary battery, which includes a positive electrode including the positive electrode active material, may be significantly improved. Specifically, the lithium secondary battery may have a small resistance increase rate value that appears as charge and discharge cycles are repeated at high temperatures.

According to the present invention, the pre-established positive electrode active material quality evaluation criteria in step (A) may be that the Raman shift value of the peak corresponding to the A1g vibration mode of LiNiO₂ is 560 cm⁻¹ or more. Specifically, the pre-established positive electrode active material quality evaluation criteria may be that the Raman shift value of the peak corresponding to the A1g vibration mode of LiNiO₂ is 560 cm⁻¹ or more, 570 cm⁻¹ or less, 580 cm⁻¹ or less, 590 cm⁻¹ or less, and less than 597 cm⁻¹. In this case, it may be considered that the coating portion containing cobalt is formed on the surface of the positive electrode active material in the form of a single particle to be optimized for improving the resistance performance of the lithium secondary battery.

### Step (B)

Step (B) is a step of determining the positive electrode active material as a working product when a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in the Raman spectrum of the surface of the positive electrode active material is 0.30 or less. The ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂, specifically, may be greater than 0, 0.10 or more, and 0.30 or less.

In a case in which the ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ in the Raman spectrum of the surface of the positive electrode active material is 0.30 or less, since an appropriate amount of electrochemically active LiCoO₂ crystal structure, instead of electrochemically inactive NiO, is formed on the surface, the resistance is reduced.

### Positive Electrode Active Material

The present invention provides a positive electrode active material in a form of a single particle which includes a lithium transition metal oxide in a form of a single particle; and a coating portion containing cobalt which is formed on the lithium transition metal oxide in the form of a single particle, wherein a Raman shift value of a peak corresponding to an A1g vibration mode of LiNiO₂ in a Raman spectrum of a surface of the positive electrode active material is 560 cm⁻¹ or more. The Raman shift value of the peak corresponding to the A1g vibration mode of LiNiO₂ may specifically be 560 cm⁻¹ or more, 570 cm⁻¹ or less, 580 cm⁻¹ or less, 590 cm⁻¹ or less, and less than 597 cm⁻¹.

The positive electrode active material according to the present invention is the positive electrode active material which has been determined as the working product through the method of evaluating quality of a positive electrode active material according to the present invention.

The inventors of the present invention have confirmed that, in a case in which the positive electrode active material in the form of a single particle includes the lithium transition metal oxide in the form of a single particle; and the coating portion containing cobalt which is formed on the lithium transition metal oxide in the form of a single particle, wherein the Raman shift value of the peak corresponding to the A1g vibration mode of LiNiO₂ in the Raman spectrum of the surface of the positive electrode active material is 560 cm⁻¹ or more, resistance performance of a lithium secondary battery including the positive electrode active material is improved.

The positive electrode active material according to the present invention is the same as the positive electrode active material of step (A'), wherein it may be prepared as described above.

In a case in which the Raman shift value of the peak corresponding to the A1g vibration mode of LiNiO₂ in the Raman spectrum of the surface of the positive electrode active material is less than 560 cm⁻¹, since cobalt does not diffuse much into a surface portion of the positive electrode active material, there is a problem in that the surface is not stabilized and the resistance performance of the lithium secondary battery including the positive electrode active material is not improved.

According to the present invention, the positive electrode active material in the form of a single particle may further include LiCoO₂ in a form of an island which is discontinuously formed on the surface. The LiCoO₂ in the form of an island is discontinuously formed on the surface of the positive electrode active material. That is, the LiCoO₂ in the form of an island does not entirely cover the surface of the positive electrode active material, but is partially dispersed and distributed. The LiCoO₂ in the form of an island may be discontinuously formed on an area of 5% to 50% based on a total area of the surface of the positive electrode active material. In this case, since the coating portion and the LiCoO₂ in the form of an island are present in an appropriate ratio, performance of the battery may be further improved.

According to the present invention, a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in the Raman spectrum of the surface of the positive electrode active material may be 0.3 or less. The ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂, specifically, may be greater than 0, 0.10 or more, and 0.30 or less. In this case, since the appropriate amount of the electrochemically active LiCoO₂ crystal structure, instead of the electrochemically inactive NiO, is present on the surface of the positive electrode active material, resistance performance of a lithium secondary battery including the positive electrode active material may be further improved. The peak (550 cm⁻¹ to 620 cm⁻¹) corresponding to the A1g vibration mode of LiCoO₂ may be a peak resulting from the LiCoO₂ in the form of an island.

According to the present invention, the positive electrode active material in the form of a single particle may have an average particle diameter (D₅₀) of 0.1 µm to 10 µm. Specifically, the positive electrode active material in the form of a single particle may have an average particle diameter (D₅₀) of 0.1 µm, 1.0 µm, 2.0 µm or more, 5.0 µm, 6.0 µm, 7.0 µm, 8.0 µm, 9.0 µm, or 10.0 µm or less. In this case, since a rolling ratio of the battery including the positive electrode active material in the form of a single particle may be increased, the performance of the battery may be further improved.

According to the present invention, the positive electrode active material in the form of a single particle may have a form in which 50 or less, specifically, 30, 20, 10, or 5 or less primary particles each composed of 10 or less single crystal grains are aggregated. In this case, capacity and resistance performance of the battery may be improved, and occurrence of cracks in the particle in a process of repeating charge and discharge may be reduced. In this case, the single crystal grain may have an average particle diameter (D_{EBSD}) of 0.1 µm to 10 µm. Specifically, the single crystal grain may have an average particle diameter (D_{EBSD}) of 0.1 µm, 1.0 µm, 2.0 µm or more, 5.0 µm, 6.0 µm, 7.0 µm, 8.0 µm, 9.0 µm, or 10.0 µm or less.

According to the present invention, the lithium transition metal oxide in the form of a single particle may be a lithium composite transition metal oxide containing nickel (Ni), cobalt (Co), and manganese (Mn). In this case, the lithium transition metal oxide in the form of a single particle may contain 80 mol% or 85 mol% or more of nickel (Ni) among total metals excluding lithium. Specifically, the lithium transition metal oxide in the form of a single particle may specifically have a composition represented by the following Formula 1.

[Formula 1] LiₐNiₑCo_{c}Mn_{d}M¹ₑO₂

In Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.9≤a≤1.1, 0.8≤b<1.0, 0<c<0.2, 0<d<0.2, 0≤e≤0.1, and b+c+d+e=1.
b represents an atomic fraction of nickel among metallic elements other than lithium in the lithium transition metal oxide, wherein b may be 0.8, 0.85 or more, 0.95, or 0.98 or less.
c represents an atomic fraction of cobalt among the metallic elements other than lithium in the lithium transition metal oxide, wherein c may be 0.01 or more, 0.1, or 0.2 or less.
d represents an atomic fraction of manganese among the metallic elements other than lithium in the lithium transition metal oxide, wherein d may be 0.01 or more, 0.1, or 0.2 or less.
e represents an atomic fraction of element M¹ among the metallic elements other than lithium in the lithium transition metal oxide, wherein e may be 0 or more, 0.02, 0.05, or 0.1 or less.

In the present invention, the coating portion is a layer which is formed by diffusion of cobalt from a surface of the lithium transition metal oxide in the form of a single particle in a central direction when the lithium transition metal oxide in the form of a single particle and a cobalt raw material are mixed and then heat-treated. Thus, a composition of the coating portion is similar to the composition of the lithium transition metal oxide in the form of a single particle which is included in the positive electrode active material of the present invention, but a ratio of the cobalt among the total metals other than lithium is greater than that of the lithium transition metal oxide in the form of a single particle. Ni present in the lithium transition metal oxide in the form of a single particle may be substituted with Co while the cobalt diffuses from the surface of the lithium transition metal oxide in the form of a single particle in the central direction, and the coating portion may have a structure identical to that of the lithium transition metal oxide in the form of a single particle, that is, a layered structure.

According to the present invention, the coating portion may be a region ranging from 5 nm to 100 nm from the surface of the positive electrode active material in the central direction. The coating portion may specifically be a region up to 5 nm, 10 nm, 20 nm, 30 nm, 40 nm, 50 nm, 60 nm, 70 nm, 80 nm, 90 nm, or 100 nm from the surface of the positive electrode active material in the central direction.

In the present specification, the coating portion is a region from the surface of the positive electrode active material to a point where a Co content measured through a transmission electron microscope (TEM)-energy dispersive X-ray spectroscopy (EDX) experiment is greater than 1.1 times a total average Co content (mol%) of the positive electrode active material. In this case, in the TEM-EDX experiment, after making a thin-film sample with a thickness of 100 nm to 200 nm from positive electrode active material powder with FEI's Helios G4 UX FIB equipment, an X-ray spectrum of an element for each position of the sample is measured using FEI's Titan G2 80-200 ChemiSTEM equipment and EDX (in-column super-X Energy Dispersive X-ray spectroscopy) unit (ChemiSTEM technology), and a molar ratio (mol%) value for each element may be obtained by comparing intensities.

### Method of Preparing Positive Electrode

A method of preparing a positive electrode according to the present invention is characterized in that it includes the steps of: (S1) preparing a positive electrode active material in a form of a single particle which includes a lithium transition metal oxide in a form of a single particle; and a coating portion containing cobalt which is formed on the lithium transition metal oxide in the form of a single particle; (S2) evaluating quality of the positive electrode active material by the method of evaluating quality of a positive electrode active material according to the present invention; and (S3) preparing a positive electrode by using the positive electrode active material determined as a working product.

Hereinafter, each step of the method of preparing a positive electrode will be described in more detail.

### Step (S1)

Step (S1) is a step of preparing a positive electrode active material in a form of a single particle which includes a lithium transition metal oxide in a form of a single particle; and a coating portion containing cobalt which is formed on the lithium transition metal oxide in the form of a single particle.

Step (S1) is the same as step (A') of the method of evaluating quality of a positive electrode active material.

According to the present invention, the positive electrode active material in the form of a single particle may be prepared by heat-treating a mixture in which the lithium transition metal oxide in the form of a single particle and a cobalt raw material are mixed. In a case in which the mixture is heat-treated, a Raman shift of the peak corresponding to the A1g vibration mode of LiNiO₂ in the Raman spectrum of the surface of the positive electrode active material is identified while cobalt ions present in the cobalt raw material diffuse from a surface of the lithium transition metal oxide in the form of a single particle to a center portion.

The heat treatment temperature may be in a range of greater than 720°C to less than 780°C, and may specifically be greater than 720°C, 730°C or higher, 740°C or higher, 760°C or less, 770°C or less, and less than 780°C. In a case in which the mixture is heat-treated within the above temperature range, since the coating portion containing cobalt is optimally formed on the surface of the positive electrode active material in the form of a single particle, resistance performance of a lithium secondary battery, which includes a positive electrode including the positive electrode active material, may be improved. Specifically, in the case that the mixture is heat-treated within the above temperature range, a positive electrode active material in the form of a single particle, which includes a lithium transition metal oxide in a form of a single particle; and a coating portion containing cobalt which is formed on the lithium transition metal oxide in the form of a single particle, wherein a Raman shift value of a peak corresponding to an A1g vibration mode of LiNiO₂ in a Raman spectrum of a surface of the positive electrode active material is 560 cm⁻¹ or more, may be prepared. Also, the positive electrode active material, which is prepared by heat-treating the mixture within the above temperature range, may have a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in a Raman spectrum of the surface of 0.3 or less.

### Step (S2)

Step (S2) is a step of evaluating quality of the positive electrode active material by the method of evaluating quality of a positive electrode active material according to the present invention.

That is, for the positive electrode active material in the form of a single particle in which the coating layer containing cobalt is formed, a Raman spectrum of the surface of the positive electrode active material is obtained by using a Raman spectrometer, and step (S2) includes a step of determining the positive electrode active material as a working product when a Raman shift value of a peak corresponding to an A1g vibration mode of LiNiO₂ in the Raman spectrum of the surface of the positive electrode active material satisfies pre-established positive electrode active material quality evaluation criteria, and determining the positive electrode active material as a defective product when the Raman shift value does not satisfy the pre-established positive electrode active material quality evaluation criteria.

Specific details are as described above.

### Step (S3)

Step (S3) is a step of preparing a positive electrode by using the positive electrode active material determined as a working product.

The positive electrode may be prepared by applying a composition (slurry) for forming a positive electrode active material layer, which contains the positive electrode active material determined as the working product, a conductive agent, and a binder, on a current collector and then drying it to form an active material layer. The active material layer may be formed on one surface or both surfaces of the current collector.

The current collector is not particularly limited as long as it has conductivity without causing adverse chemical changes in the battery, and, with respect to a positive electrode collector, for example, stainless steel, aluminum, nickel, titanium, fired carbon, or aluminum or stainless steel that is surface-treated with one of carbon, nickel, titanium, silver, or the like may be used, and, with respect to a negative electrode collector, for example, copper, stainless steel, aluminum, nickel, titanium, fired carbon, copper or stainless steel that is surface-treated with one of carbon, nickel, titanium, silver, or the like, and an aluminum-cadmium alloy may be used.

The current collector may typically have a thickness of 3 µm to 500 µm, and microscopic irregularities may be formed on the surface of the collector to improve adhesion of a positive electrode material or a negative electrode material. The current collector, for example, may be used in various shapes such as that of a film, a sheet, a foil, a net, a porous body, a foam body, a non-woven fabric body, and the like.

The composition for forming a positive electrode active material layer may be prepared by dissolving or dispersing the positive electrode active material determined as the working product, the conductive agent, and the binder in a solvent.

The positive electrode active material determined as the working product is a compound capable of reversibly intercalating and deintercalating lithium, wherein the positive electrode active material may specifically be a lithium composite metal oxide including lithium and at least one transition metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-y}Mn_{y}O₂ (0<Y<1), LiMn_{2-z}Ni_{z}O₄ (0<Z<2)), lithium-nickel-cobalt-based oxide (e.g., LiNi_{1-Y1}Co_{Y1}O₂ (0<Y1<1)), lithium-manganese-cobalt-based oxide (e.g., LiCo_{1-Y2}Mn_{Y2}O₂ (0<Y2<1), LiMn_{2-Z1}Co_{z1}O₄ (0<Z1<2)), lithium-nickel-manganese-cobalt-based oxide (e.g., Li(NiₚCo_{q}Mnᵣ₁)O₂ (0<p<1, 0<q<1, 0<r1<1, and p+g+r1=1) or Li(Niₚ₁Co_{q1}Mnᵣ₂)O₄ (0<p1<2, 0<q1<2, 0<r2<2, and p1+q1+r2=2)), or lithium-nickel-cobalt-transition metal (M) oxide (e.g., Li(Niₚ₂Co_{q2}Mnᵣ₃Mₛ₂)O₂ (M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

The positive electrode active material determined as the working product may be included in an amount of 80 wt% to 99 wt%, more specifically, 85 wt% to 98 wt% based on a total weight of the active material layer. In a case in which the amount of the positive electrode active material determined as the working product is within the above range, excellent capacity characteristics and electrochemical properties may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, KETJEN black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The conductive agent may be included in an amount of 1 wt% to 30 wt% based on the total weight of the active material layer.

The binder improves adhesion between the active material particles and adhesion between the active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The binder may be included in an amount of 1 wt% to 30 wt% based on the total weight of the positive electrode active material layer.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the composition for forming a positive electrode active material layer may be adjusted to have an appropriate viscosity in consideration of an application thickness, preparation yield, or workability of the composition for forming a positive electrode active material layer, and is not particularly limited.

As described above, a positive electrode may be prepared from the positive electrode active material which is determined as the working product according to the method of evaluating quality of a positive electrode active material according to the present invention, and the positive electrode may be used as an electrode of a lithium secondary battery. Since the lithium secondary battery has improved resistance performance, the lithium secondary battery may be suitable for portable devices, such as mobile phones, notebook computers, and digital cameras, and electric cars such as hybrid electric vehicles (HEVs).

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Example 1

A mixture was prepared by mixing a lithium transition metal oxide in a form of a single particle, which had a composition represented by LiNi_{0.88}Co_{0.03}Mn_{0.09}O₂, with powder-type Co(OH)₂ (Huayou Cobalt Co., Ltd.) at a molar ratio of 1:0.02. The mixture was heat-treated at a temperature of 660°C for 3 hours in an oxygen atmosphere to prepare a positive electrode active material (average particle diameter: 4 µm) in a form of a single particle in which a coating layer containing cobalt was formed.

### Preparation Example 2

A positive electrode active material (average particle diameter: 4 µm) in a form of a single particle, in which a coating layer containing cobalt was formed, was prepared in the same manner as in Preparation Example 1 except that the mixture was heat-treated at a temperature of 680°C.

### Preparation Example 3

A positive electrode active material (average particle diameter: 4 µm) in a form of a single particle, in which a coating layer containing cobalt was formed, was prepared in the same manner as in Preparation Example 1 except that the mixture was heat-treated at a temperature of 700°C.

### Preparation Example 4

A positive electrode active material (average particle diameter: 4 µm) in a form of a single particle, in which a coating layer containing cobalt was formed, was prepared in the same manner as in Preparation Example 1 except that the mixture was heat-treated at a temperature of 720°C.

### Preparation Example 5

A positive electrode active material (average particle diameter: 4 µm) in a form of a single particle, in which a coating layer containing cobalt was formed, was prepared in the same manner as in Preparation Example 1 except that the mixture was heat-treated at a temperature of 740°C.

### Preparation Example 6

A positive electrode active material (average particle diameter: 4 µm) in a form of a single particle, in which a coating layer containing cobalt was formed, was prepared in the same manner as in Preparation Example 1 except that the mixture was heat-treated at a temperature of 760°C.

### Preparation Example 7

A positive electrode active material (average particle diameter: 4 µm) in a form of a single particle, in which a coating layer containing cobalt was formed, was prepared in the same manner as in Preparation Example 1 except that the mixture was heat-treated at a temperature of 780°C.

### Example: Quality Evaluation of the Positive Electrode Active Material

After a sample of each of the positive electrode active materials prepared in Preparation Examples 1 to 7 was placed on a general-purpose X-ray diffraction (XRD) holder, a pretreatment was performed such that a surface height of the sample was uniform by compressing the sample with a slide glass, and a Raman spectrum of a surface of the positive electrode active material was obtained by measuring a portion corresponding to an area of 410 µm × 100 µm of the sample located on the XRD holder with a Raman spectrometer (using a 532 nm laser).

A Raman shift value of a peak corresponding to an A1g vibration mode of LiNiO₂ and a ratio of an intensity of a peak (550 cm⁻¹ to 620 cm⁻¹) corresponding to an A1g vibration mode of LiCoO₂ to an intensity of the peak (500 cm⁻¹ to 600 cm⁻¹) corresponding to the A1g vibration mode of LiNiO₂ were identified in the Raman spectrum, and the results thereof are presented in Table 1 below.

**[Table 1]**

| | Raman shift value of peak corresponding to A1g vibration mode of LiNiO₂ (cm⁻¹) | LiNiO₂/LiCoO₂ |
|---|---|---|
| Preparation Example 1 | 555 | 1.50 |
| Preparation Example 2 | 556 | 1.39 |
| Preparation Example 3 | 557 | 1.02 |
| Preparation Example 4 | 558 | 0.62 |
| Preparation Example 5 | 560 | 0.17 |
| Preparation Example 6 | 560 | 0.17 |
| Preparation Example 7 | 559 | 0.16 |

Referring to Table 1, the positive electrode active materials of Preparation Examples 5 and 6, which corresponded to a case in which the Raman shift value of the peak corresponding to the A1g vibration mode of LiNiO₂ in the Raman spectrum was 560 cm⁻¹ or more (pre-established value), were determined as working products.

The positive electrode active materials of Preparation Examples 1 to 4 and Preparation Example 7 were all determined as defective products because the Raman shift value of the peak corresponding to the A1g vibration mode of LiNiO₂ in the Raman spectrum did not satisfy 560 cm⁻¹ or more.

In addition, with respect to the positive electrode active materials of Preparation Examples 5 and 6, it may be confirmed that LiNiO₂/LiCoO₂, as the ratio of the intensity of the peak (550 cm⁻¹ to 620 cm⁻¹) corresponding to the A1g vibration mode of LiCoO₂ to the intensity of the peak (500 cm⁻¹ to 600 cm⁻¹) corresponding to the A1g vibration mode of LiNiO₂ in the Raman spectrum, was 0.3 or less.

### Experimental Example: Battery Characteristics Evaluation

### (Half-cell Preparation)

A composition for forming a positive electrode active material layer was prepared by adding each of the positive electrode active materials prepared in Preparation Examples 1 to 7, a carbon black conductive agent (Denka Company Limited, Denka Black), and a PVdF binder (Kureha Corporation, KF1300) to a N-methylpyrrolidone (NMP) solvent (Daejung Chemicals & Metals, Co., Ltd.) at a weight ratio of 95:3:2.

A positive electrode active material layer was formed by coating one surface of a 20 µm thick aluminum foil current collector with the composition for forming a positive electrode active material layer and drying the coated current collector at a temperature of 135°C for 3 hours. Subsequently, a positive electrode was prepared by rolling the positive electrode active material layer by a roll-pressing method such that a porosity of the positive electrode active material layer after the rolling was 20 vol%.

A half-cell was prepared by using lithium metal as a negative electrode together with the positive electrode.

### (Evaluation of Battery Cycle Characteristics)

After each of the above-prepared half-cells was charged at a constant current (CC) of 0.2 C to 4.25 V at 25°C and then charged at a constant voltage (CV) of 4.25 V until the charging current was 0.05 mAh (cut-off current), each half-cell was left standing for 20 minutes and then discharged at a constant current of 0.2 C to 2.5 V.

Thereafter, the cell was transferred to a chamber at 45°C, and charging of the cell at a constant current of 0.33 C to 4.25 V, charging of the cell at a constant voltage (CV) of 4.25 V until the charging current was 0.05 mAh (cut-off current), and discharging of the cell at a constant current of 0.33 C to 2.5 V were set as one cycle and 50 cycles of the charging and discharging were performed. In this case, also, a percentage of a direct current internal resistance (DCIR) value in the 50^{th} cycle to a DCIR value in the 1^{st} cycle was set as a resistance increase rate and the resistance increase rates are presented in Table 2 below. For reference, a DCIR value in an n^{th} cycle is a value calculated by dividing a difference between a voltage at 10 seconds after the start of discharging and a voltage in a fully-charged state, which was obtained while discharging the cell at a constant current of 0.33 C to 2.5 V, by a current in the n^{th} cycle.

**[Table 2]**

| | Resistance increase rate (%) |
|---|---|
| Preparation Example 1 | 140.6 |
| Preparation Example 2 | 142.2 |
| Preparation Example 3 | 141.3 |
| Preparation Example 4 | 140.8 |
| Preparation Example 5 | 137.4 |
| Preparation Example 6 | 139.5 |
| Preparation Example 7 | 145.7 |

As illustrated in Table 2, with respect to the positive electrode active materials of Preparation Examples 5 and 6 which were classified as the working products according to the method of evaluating quality of a positive electrode active material of the present invention, resistance increase rates of the batteries including the positive electrode active materials were 140.0% or less, wherein it may be confirmed that the resistance increase rates were significantly lower than resistance increase rates of the batteries including the positive electrode active materials of Preparation Examples 1 to 4 and 7.

Thus, according to the present invention, it may be understood that a poor-quality positive electrode active material may be easily filtered out by measuring a Raman spectrum of a surface of the positive electrode active material. That is, it may be understood that it may be easier to select a good positive electrode active material capable of improving resistance performance of a lithium secondary battery. Also, it may be understood that the positive electrode active material according to the present invention may improve the resistance performance of the lithium secondary battery.

## Claims

1. A method of evaluating quality of a positive electrode active material, the method comprising: (A) a first determination step of determining the positive electrode active material as a working product when a Raman shift value of a peak corresponding to an A1g vibration mode of LiNiO₂ in a Raman spectrum of a surface of the positive electrode active material satisfies pre-established positive electrode active material quality evaluation criteria, and determining the positive electrode active material as a defective product when the Raman shift value does not satisfy the pre-established positive electrode active material quality evaluation criteria.

2. The method of claim 1, further comprising a step of (A') preparing the positive electrode active material in a form of a single particle which includes a lithium transition metal oxide in a form of a single particle; and a coating portion containing cobalt which is formed on the lithium transition metal oxide in the form of the single particle, before the step (A).

3. The method of claim 2, wherein the positive electrode active material in the form of the single particle is prepared by heat-treating a mixture in which the lithium transition metal oxide in the form of the single particle and a cobalt raw material are mixed.

4. The method of claim 1, wherein the pre-established positive electrode active material quality evaluation criteria in the step (A) is that the Raman shift value of the peak corresponding to the A1g vibration mode of LiNiO₂ is 560 cm⁻¹ or more.

5. The method of claim 1, further comprising (B) a second determination step of determining the positive electrode active material as the working product when a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to an A1g vibration mode of LiNiO₂ in the Raman spectrum of the surface of the positive electrode active material determined as the working product in the step (A) is 0.3 or less, and determining the positive electrode active material as the defective product when the ratio is greater than 0.3.

6. A method of preparing a positive electrode, the method comprising steps of:
(S1) preparing the positive electrode active material in a form of a single particle which includes a lithium transition metal oxide in a form of a single particle; and a coating portion containing cobalt which is formed on the lithium transition metal oxide in the form of the single particle;
(S2) evaluating the quality of the positive electrode active material by the method of any one of claims 1 to 5; and
(S3) preparing the positive electrode by using the positive electrode active material determined as the working product.

7. The method of claim 6, wherein the positive electrode active material in the form of the single particle is prepared by heat-treating a mixture in which the lithium transition metal oxide in the form of the single particle and a cobalt raw material are mixed.

8. The method of claim 6, wherein the positive electrode active material in the form of the single particle is prepared by heat-treating a mixture, in which the lithium transition metal oxide in the form of the single particle and a cobalt raw material are mixed, at a temperature of greater than 720°C to less than 780°C.

9. A positive electrode active material in a form of a single particle, the positive electrode active material comprising: a lithium transition metal oxide in a form of a single particle; and a coating portion containing cobalt which is formed on the lithium transition metal oxide in the form of the single particle,
wherein a Raman shift value of a peak corresponding to an A1g vibration mode of LiNiO₂ in a Raman spectrum of a surface of the positive electrode active material is 560 cm⁻¹ or more.

10. The positive electrode active material in the form of the single particle of claim 9, further comprising LiCoO₂ in a form of an island which is discontinuously formed on the surface.

11. The positive electrode active material in the form of the single particle of claim 9, wherein a ratio of an intensity of a peak (550 cm⁻¹ to 620 cm⁻¹) corresponding to an A1g vibration mode of LiCoO₂ to an intensity of a peak (500 cm⁻¹ to 600 cm⁻¹) corresponding to the A1g vibration mode of LiNiO₂ in the Raman spectrum of the surface of the positive electrode active material is 0.3 or less.

12. The positive electrode active material in the form of the single particle of claim 9, wherein the positive electrode active material in the form of the single particle has an average particle diameter (D₅₀) of 0.1 µm to 10 µm.

13. The positive electrode active material in the form of the single particle of claim 9, wherein the positive electrode active material in the form of the single particle has a form in which 50 or less primary particles, which are aggregated, wherein each of the primary particles composed of 10 or less single crystal grains.

14. The positive electrode active material in the form of the single particle of claim 9, wherein the lithium transition metal oxide in the form of the single particle is a lithium composite transition metal oxide containing nickel (Ni), cobalt (Co), and manganese (Mn).

15. The positive electrode active material in the form of the single particle of claim 9, wherein the lithium transition metal oxide in the form of the single particle has a composition represented by Formula 1:
[Formula 1] LiₐNiₑCo_{c}Mn_{d}M¹ₑO₂
wherein, in Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.9≤a≤1.1, 0.8≤b<1.0, 0<c<0.2, 0<d<0.2, 0≤e≤0.1, and b+c+d+e=1.

16. The positive electrode active material in the form of the single particle of claim 9, wherein the coating portion is a region ranging from 5 nm to 100 nm from the surface of the positive electrode active material in a central direction.
